(19) Europäisches Patentamt
European Patent Office
Office européen des brevets

(11) **EP 3 950 302 A1**

(12) **EUROPEAN PATENT APPLICATION**
published in accordance with Art. 153(4) EPC

(43) Date of publication:
**09.02.2022 Bulletin 2022/06**

(21) Application number: **20776805.2**

(22) Date of filing: **27.03.2020**

(51) International Patent Classification (IPC):
**B32B 5/24** (2006.01)    **B32B 27/00** (2006.01)

(52) Cooperative Patent Classification (CPC):
**B32B 5/24; B32B 27/00**

(86) International application number:
**PCT/JP2020/014030**

(87) International publication number:
**WO 2020/196834 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019 JP 2019064466**

(71) Applicant: **Dai Nippon Printing Co., Ltd.**
**Tokyo 162-8001 (JP)**

(72) Inventors:
• **NAKAI, Kosuke**
**Tokyo 162-8001 (JP)**
• **SAITO, Takaho**
**Tokyo 162-8001 (JP)**
• **SUGITA, Natsuo**
**Tokyo 162-8001 (JP)**
• **FUJII, Kouki**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET FOR RECOATING AND PRODUCTION METHOD FOR DECORATIVE SHEET FOR RECOATING**

(57)    The present invention provides a decorative sheet for recoating, in which the recoating layer is laminated with a sufficient adhesive strength, and the recoating layer has satisfactory ink receptivity for retaining a colorant. The decorative sheet for recoating includes: a base material; a recoating layer that is provided on at least one surface side of the base material, contains thermoplastic resin fibers as fibers of a constituent component, and has spaces among the fibers; and an adhesion layer between the base material and the recoating layer, which has been formed by melt deposition or flow deposition of at least a part of the thermoplastic resin fibers.

Fig. 1

**Description**

Technical Field

The present invention relates to a decorative sheet for recoating and a production method for the decorative sheet for recoating.

Background Art

For surface finishing of furniture, building interior materials, household electrical products and the like, a decorative sheet with a wood grain pattern or the like provided on a base material is laminated on the surface of the above products, by means of laminating or the like. There are two types of decorative sheets: one is already colored, and the other is not colored but is later coated with a paint such as stain (stain). The latter is called as a decorative sheet for recoating (recoating). Here, the stain is a paint for coloring a wood surface, and is obtained by adding a pigment or a dye to linseed oil, a resin and the like, in a form of liquid, gel, spray or the like. There are a water-based type and an oil-based type, and are called an oil stain, a stain varnish, a water-based stain and the like. By a method of assembling a product with the use of a material in which the decorative sheet for recoating is laminated for surface finishing, and then applying a paint such as stain to the decorative sheet on the surface of the product and coloring the decorative sheet, it becomes possible to easily color the product to any color.

As a conventional decorative sheet for recoating, there has been proposed such a decorative sheet that a picture is printed on a base material with the use of a printing ink and then a top coat paint is applied thereon (see, for example, PTL1). However, a surface of the conventional decorative sheet for recoating is formed smoothly, a stain or the like results in dripping even though it is tried to apply the stain or the like to form thick coating, and it has been difficult to obtain a surface excellent in ink receptivity for retaining the colorant.

Then, in order to obtain the surface excellent in the ink receptivity when the stain or the like has been applied so as to form thick coating, a decorative sheet for recoating is proposed, which subjects a base material to picture printing with the use of a printing ink and further using a non-woven fabric for the recoating layer that is positioned on the surface (for example, see PTL2). The decorative sheet for recoating, which is proposed in PTL2, surely retains a colorant such as the stain in a space of a non-woven fabric, and prevents the paint from dripping from the surface of the decorative sheet; and the paint can be applied to form a coating excellent in the ink receptivity.

Citation List

Patent Literature

   PTL1: JP 60-149457 A
   PTL2: JP 9-262934 A

Summary of Invention

Technical Problem

In a decorative sheet for recoating proposed in PTL2, means by thermal welding is disclosed as means for laminating the recoating layer ([0012] and [0036] in PTL2). As the means by the thermal welding, there are disclosed means for thermocompression bonding adopting a thermoplastic resin for a base material or a printing ink of a picture print, and means for thermocompression bonding adopting a thermoplastic resin for a fiber of a non-woven fabric of a recoating layer. However, in these thermocompression bonding means, if the heating is not sufficient, there has arisen a problem that a sufficient adhesive strength of the recoating layer cannot be obtained. In addition, in these means by the thermocompression bonding, when heating becomes excessive in order to obtain a sufficient adhesive strength of the recoating layer, there has been a problem in that spaces of the non-woven fabric are buried by the thermoplastic resin, or the fiber of the non-woven fabric elutes and the fiber form cannot be maintained, and thereby, the ink receptivity for retaining the colorant results in being lost.

In addition, in the decorative sheet for recoating proposed in PTL2, means using an adhesive is disclosed as means for laminating the recoating layer ([0036] in PTL2). However, in the means using the adhesive, when the amount of the adhesive is too large, there may be a problem that the adhesive seeps out from the surface of the recoating layer, and when the amount of the adhesive is small, there has been a problem that a sufficient adhesive strength for the recoating layer cannot be obtained. Furthermore, in the means using the adhesive, it is necessary to select the adhesive according to the material to be bonded in order that the recoating layer can obtain the sufficient adhesive strength, and it has been difficult to select the adhesive which satisfies the conditions.

In view of the above problems, an object of the present invention is to provide: a decorative sheet for recoating, in which the recoating layer is laminated with a sufficient adhesive strength, and the recoating layer has satisfactory ink receptivity for retaining a colorant; and a production method of the decorative sheet for recoating.

Solution to Problem

In order to solve the above problems, the present inventors have intensively studied, and as a result, have found that the above problems can be solved by a decorative sheet for recoating, which has an adhesion layer between a base material and a recoating layer, which has been formed by melt deposition or flow deposition of at least a part of constituent components of the recoating layer. Specifically, the present invention provides the following [1] to [9].

[1] A decorative sheet for recoating includes: a base material; a recoating layer that is provided on at least one surface side of the base material, contains thermoplastic resin fibers as fibers of a constituent component, and has spaces among the fibers; and an adhesion layer between the base material and the recoating layer, which has been formed by melt deposition or flow deposition of at least a part of the thermoplastic resin fibers.

[2] The decorative sheet for recoating according to [1], wherein the recoating layer has a resin coating film on at least a part of surfaces of the fibers while maintaining at least a part of the spaces.

[3] The decorative sheet for recoating according to [1] or [2], wherein the base material is a resin base material.

[4] The decorative sheet for recoating according to any one of [1] to [3], wherein the fibers constituting the recoating layer contain two or more types of thermoplastic resin fibers having different melting points from each other.

[5] The decorative sheet for recoating according to [4], wherein a main component of the adhesion layer is a melted component of the thermoplastic resin fiber that has a lower melting point among two or more types of thermoplastic resin fibers which have different melting points from each other.

[6] The decorative sheet for recoating according to any one of [1] to [5], wherein the fibers constituting the recoating layer contains two or more types of thermoplastic resin fibers having different glass transition temperatures.

[7] The decorative sheet for recoating according to [6], wherein the main component of the adhesion layer is a melted or fluidized component of the thermoplastic resin fiber that has a lower glass transition temperature among two or more types of thermoplastic resin fibers which have different glass transition temperatures from each other.

[8] The decorative sheet for recoating according to any one of [1] to [7], wherein the recoating layer has a colorant on at least parts of the spaces among and the surfaces of the fibers.

[9] A production method for a decorative sheet for recoating includes: a step of providing a base material; a step of providing a non-woven fabric that contains two or more types of thermoplastic resin fibers having different melting points as fibers of a constituent component; a step of obtaining a laminate in which the non-woven fabric is arranged on the base material; a step of heating the laminate to a temperature of a lowest melting point of the thermoplastic resin fibers or higher; and a step of compressing the heated laminate so that a part of the thermoplastic resin fibers of which the fluidity has been enhanced is deposited on the base material side to form an adhesion layer.

Advantageous Effects of Invention

According to the present invention, it is possible to provide: a decorative sheet for recoating, in which the recoating layer is laminated with a sufficient adhesive strength, and the recoating layer has satisfactory ink receptivity for retaining a colorant; and a production method of the decorative sheet for recoating.

Brief Description of Drawings

[Fig. 1] Fig. 1 is a schematic cross-sectional view (part 1) of a decorative sheet for recoating according to an embodiment of the present invention.

[Fig. 2] Fig. 2 is a cross-sectional view (part 1) of an actual photograph of the decorative sheet for recoating according to the embodiment of the present invention.

[Fig. 3] Fig. 3 is a cross-sectional view (part 2) of an actual photograph of the decorative sheet for recoating according to the embodiment of the present invention.

[Fig. 4] Fig. 4 is a schematic cross-sectional view (part 2) of a decorative sheet for recoating according to an embodiment of the present invention.

[Fig. 5] Fig. 5 is a cross-sectional view of an actual photograph of a non-woven fabric to be used in the decorative sheet for recoating according to the embodiment of the present invention.

Description of Embodiments

Embodiments of the present invention will be described below with reference to the drawings. In the following description of the drawings, the same or similar parts are represented by the same or similar reference numerals. However, the drawings are schematic, and a relationship between a thickness and a planar dimension, a ratio among thicknesses of respective layers, and the like are different from actual ones. Accordingly, specific thicknesses and dimensions should be determined in light of the following description. In addition, it is a matter of course that the drawings include portions having different dimensional relationships and ratios from each other also between the drawings.

(Embodiments)

[Decorative sheet for recoating]

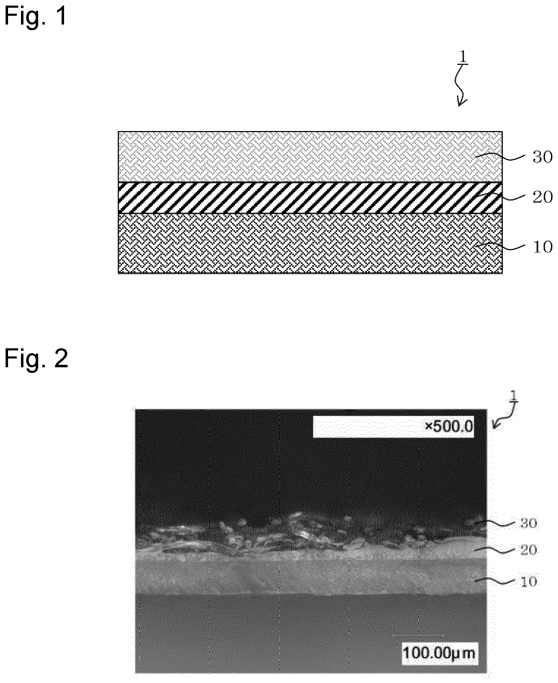

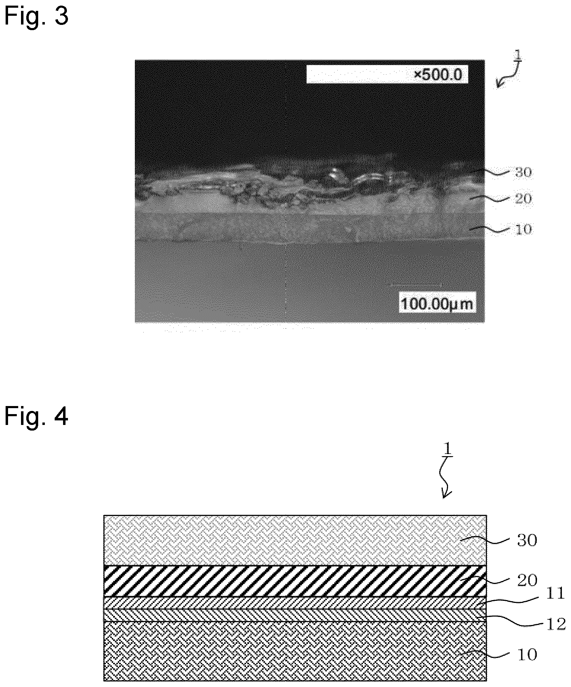

A decorative sheet for recoating according to an embodiment of the present invention includes as shown in Fig. 1: a base material 10; a recoating layer 30 that is provided on at least one surface side of the base material 10, contains thermoplastic resin fibers as fibers of a constituent component, and has spaces among the fibers; and an adhesion layer 20 between the base material 10 and the recoating layer 30, which has been formed by melt deposition or flow deposition of at least a part of the thermoplastic resin fibers. Cross-sectional photographs of the decorative sheet 1 for recoating according to the embodiment of the present invention, which have been actually shot, are shown in Fig. 2 and Fig. 3.

<Base material>

The base material 10 is not particularly limited as long as the base material is usually used as the decorative sheet, and can be appropriately selected from a resin base material, a metal base material, a ceramic-based base material, a fiber-based base material, a wood-based base material or the like according to the application. The base material 10 is preferably the resin base material or the metal base material from the viewpoint that thermal conductivity is satisfactory, and is more preferably the resin base material from the viewpoint of a balance between tensile strength and elongation characteristics. The base material 10 which is used in the decorative sheet 1 for recoating shown in Fig. 2 and Fig. 3 is polyvinyl chloride of the resin base material.
Each of the above base materials may be used solely, but may be a laminate of an arbitrary combination, for example, such as a composite of the resin base material and the wood-based base material, a composite of the resin base material and the metal base material, and the like. When the base material 10 is the laminate, an adhesive layer and a primer layer may be configured to be further provided between each of the layers of the laminate.
Examples of the resin base material to be used as the base material 10 include materials formed from various synthetic resins. Examples of the synthetic resins include: olefin resins such as polyethylene, polypropylene, polymethyl pentene, and various olefin-based thermoplastic elastomers; vinyl resins such as polyvinyl chloride, polyvinylidene chloride, polyvinyl alcohol, a vinyl chloride-vinyl acetate copolymer, an ethylene-vinyl acetate copolymer, and an ethylene-vinyl alcohol copolymer; polyester resins such as polyethylene terephthalate, polybutylene terephthalate, polyethylene naphthalate, an ethylene glycol-terephthalic acid-isophthalic acid copolymer, and various polyester-based thermoplastic elastomers; acrylic resins such as polymethyl methacrylate, polyethyl methacrylate, and polybutyl acrylate; polyamide resins represented by nylon 6 or nylon 66; cellulose resins such as cellulose triacetate and cellophane; and polystyrene, polycarbonate resins, polyarylate resins and polyimide resins.
Examples of the metal base material to be used as the base material 10 include materials formed from: aluminum; aluminum alloys such as duralumin; iron; iron alloys such as stainless steel; titanium; copper; and copper alloys such as brass. In addition, as the base material 1, it is also possible to use a base material that has these metals on a surface of a base material of another material, which are formed by plating or the like.
Examples of the ceramic-based base material to be used as the base material 10 include: ceramic-based building materials such as gypsum, calcium silicate, cement and wood chip cement; and ceramics, glass, enamel, and fired tiles.
Examples of the fiber-based base material that can be used as the base material 10 include paper base materials such as tissue paper, kraft paper, titanium paper, linter paper, paperboard, and base paper for gypsum board. These paper base materials may be further added with resins such as an acrylic resin, styrene-butadiene rubber, a melamine resin and a urethane resin (specifically, resin is impregnated after paper making, or is internally charged at the time of paper making), in order to increase an interlayer strength between fibers of the paper base material or between another layer and the paper base material, and in order to prevent the occurrence of fuzz. Examples of the paper base material to which the resin is added include reinforced paper between sheets and resin-impregnated paper.

Examples of the fiber-based base material to be used as the base material 10 include a whole cloth of vinyl wall paper in which a layer of a vinyl chloride resin is provided on the surface of a paper base material, which is often used in a field of building materials.

Examples of the fiber-based base material to be used as the base material 10 include coated paper, art paper, sulfate paper, glassine paper, parchment paper, paraffin paper and Japanese paper, which are used in an office field, or for ordinary printing, packaging and the like.

Examples of the fiber-based base material to be used as the base material 10 include woven fabrics and non-woven fabrics of various fibers as well, which are distinguished from the above paper base material, but have appearance and properties similar to paper. Examples of the various fibers include inorganic fibers such as glass fiber, asbestos fiber, potassium titanate fiber, alumina fiber, silica fiber and carbon fiber. In addition, examples of various fibers include synthetic resin fibers such as polyester fiber, acrylic fiber and vinylon fiber.

Examples of the wood-based base material to be used as the base material 10 include a single plate, plywood, laminated lumber, particle board and medium-density fiber board (MDF) of various woods such as cedar, pine, cypress, Japanese oak, oak, lauan and teak.

The thickness of the base material 10 is not particularly limited; but in consideration of the physical properties such as strength, weight and bendability of the decorative sheet 1 for recoating, is preferably 50 $\mu$m or larger and 250 $\mu$m or smaller, is more preferably 80 $\mu$m or larger and 230 $\mu$m or smaller, and is further preferably 100 $\mu$m or larger and 200 $\mu$m or smaller.

It is preferable for the purpose of enhancing the design that the decorative sheet 1 for recoating further includes a picture ink layer 11 and a color masking layer 12 between the base material 10 and the recoating layer 30, as shown in Fig. 4.

«Picture ink layer»

The picture (pattern) of the picture ink layer 11 can be arbitrarily selected according to a desired design appearance such as a wood grain pattern, a stone grain pattern, a fabric grain pattern, a leather grain pattern, or a geometric pattern. When it is intended to express the design appearance of a wood grain, on the decorative sheet 1 for recoating, it is acceptable to select, for example, the wood grain pattern as the picture ink layer 11.

The picture ink layer 11 may be formed at any position on the base material 10, and may be formed on the whole surface of the base material 10.

The picture ink layer 11 can be formed by printing, for example. The picture ink layer 11 may be a single layer or may be formed of two or more layers.

As the ink to be used for forming the picture ink layer 11, an ink is used in which a binder component is appropriately mixed with a coloring component such as a pigment or a dye, an extender pigment, a solvent, a stabilizer, a plasticizer, a catalyst, a curing agent and the like.

The binder component is not particularly limited, and examples thereof include an acrylic resin, a urethane resin, a vinyl chloride-vinyl acetate copolymer, a styrene resin, a polyester resin, a chlorinated polyolefin resin, a polyvinyl butyral resin, and an alkyd resin, a petroleum resin, a ketone resin, an epoxy resin, a melamine resin, a fluorine resin, a silicone resin, a cellulose derivative and a rubber resin. These resins as the binder components can be used solely, or in combination of two or more types thereof.

The coloring component to be used can be appropriately selected from known pigments. Examples thereof include: inorganic pigments such as titanium white, lead white, carbon black, iron black, chrome yellow, titanium yellow, red iron oxide, cadmium red, ultramarine blue, and cobalt blue; organic pigments or dyes such as quinacridone red, isoindolinone yellow, nickel azo complexes, and phthalocyanine blue; metallic pigment composed of scaly foil pieces of aluminum, brass or the like; and pearly gloss (pearl) pigment composed of scaly foil pieces of titanium dioxide-coated mica, basic lead carbonate or the like.

The thickness of the picture ink layer 11 is not particularly limited, but is preferably 0.1 $\mu$m or larger and 10 $\mu$m or smaller, is more preferably 0.5 $\mu$m or larger and 7.5 $\mu$m or smaller, and is further preferably 1.0 $\mu$m or larger and 5.0 $\mu$m or smaller, from the viewpoint of satisfactorily exhibiting design by picture. When the picture ink layer 11 is formed of two or more layers, it is preferable that the total thickness of each picture ink layer 11 is in the above range.

The picture ink layer 11 may contain additives such as an antioxidant and an ultraviolet absorber, in such a range that the effects of the present invention are not impaired.

As means for applying the picture ink layer 11, gravure printing, silk screen printing, gravure offset printing, flexographic printing, ink jet printing and the like are preferable, and the gravure printing is more preferable in the case of a large lot, and the ink jet printing is more preferable in the case of a small lot.

«Color masking layer»

As shown in Fig. 4, it is preferable that the decorative sheet 1 for recoating is configured to further include the color masking layer 12 on a resin base material 10 side, as a part of the picture ink layer 11.

The color masking layer 12 can give an intended color to the base material 10 to adjust the surface color, in the case where the base material 10 has color unevenness, and the like, and can enhance the design of the decorative sheet 1 for recoating. The color masking layer 12 is often formed of an opaque color for the purpose of masking the base material 10, but can also be formed of a colored transparent color to utilize a pattern possessed by the base material 10.

As a composition for forming the color masking layer, which is used for forming the color masking layer 12, a composition is used in which a binder component is appropriately mixed with a coloring component such as a pigment or a dye, an extender pigment, a solvent, a stabilizer, a plasticizer, a catalyst, a curing agent, and the like.

The binder components and coloring components of the color masking layer 12 may be appropriately selected on the basis of the use of the decorative sheet 1 for recoating, compatibility with the picture ink layer 11 and the like, and the same binder components and coloring components as those of the picture ink layer 11 can be used.

The thickness of the color masking layer 12 is not particularly limited, but is preferably 1.0 $\mu$m or larger and 15 $\mu$m or smaller, is more preferably 2.0 $\mu$m or larger and 12 $\mu$m or smaller, and is further preferably 3.0 $\mu$m or larger and 10 $\mu$m or smaller, from the viewpoint of satisfactorily exhibiting design by masking the base material 10. When the color masking layer 12 is formed of two or more layers, the total thickness of each of the color masking layers 12 is preferably within the above range.

<Recoating layer>

The recoating layer 30 contains thermoplastic resin fibers as fibers of a constituent component, and is preferably configured to contain thermoplastic resin fibers as a main component. Here, the main component refers to a component that exceeds 50% by mass of the components constituting the recoating layer 30; and is preferably a component exceeding 60% by mass, is more preferably a component exceeding 70% by mass, and is further preferably a component exceeding 80% by mass.

The thermoplastic resin fibers constituting the recoating layer 30 are not particularly limited, and examples thereof include: (meth)acrylic resins such as poly(meth)acrylic esters; polyvinyl acetal (butyral resin) such as polyvinyl butyral; polyester resins such as polyethylene terephthalate and polybutylene terephthalate; polyolefin resins such as polyethylene and polypropylene; styrene-based resins such as polystyrene and $\alpha$-methyl styrene; acetal resins such as polyoxymethylene; thermoplastic elastomers such as a polyolefin-based thermoplastic elastomer, a polystyrene-based thermoplastic elastomer, a polydiene-based thermoplastic elastomer, a polyurethane-based thermoplastic elastomer, a polyester-based thermoplastic elastomer, and a fluororesin-based thermoplastic elastomer; vinyl chloride resins; polyurethane resins; fluororesins such as an ethylene-tetrafluoroethylene copolymer; polyamide resins; polyimide resins; polylactic acid resins; polycarbonate resins; polyvinyl acetal resins; and liquid crystalline polyester resins. Among these materials, polyolefin resins, polyurethane resins and the like are preferable in consideration of the shape stability.

The fiber constituting the recoating layer 30 preferably contains two or more types of thermoplastic resin fibers having different melting points $T_m$ from each other. It is preferable for the fiber constituting the recoating layer 30 to contain, for example, two types of thermoplastic resin fibers having different melting points $T_m$ from each other, as the thermoplastic resin fibers, where one is a thermoplastic resin fiber having a low melting point (thermoplastic resin fiber having lowest melting point $T_{m1}$) and the other is a thermoplastic resin fiber having a high melting point (thermoplastic resin fiber having highest melting point $T_{m2}$) ($T_{m1}<T_{m2}$). In this way, due to the fiber constituting the recoating layer 30, which contains two or more types of thermoplastic resin fibers having different melting points (which contains, for example, thermoplastic resin fiber having the lowest melting point $T_{m1}$ and thermoplastic resin fiber having the highest melting point $T_{m2}$), when the recoating layer 30 is laminated at a temperature T ($T_{m1}<T<T_{m2}$) in a lamination step thereof, a thermoplastic resin fiber having the lowest melting point $T_{m1}$ melts to form an adhesion layer 20 and thereby exhibits an adhesive strength, and on the other hand, a thermoplastic resin fiber having the highest melting point $T_{m2}$ maintains the form of the fiber, which thereby can make the ink receptivity for retaining the colorant satisfactory. In other words, it is preferable that the two or more types of thermoplastic resin fibers constituting the recoating layer 30, which have different melting points $T_m$ from each other, satisfy a relationship of $T_{m1}<T<T_{m2}$.

The difference ($T_{m1}-T$) between the lowest melting point $T_{m1}$ of the thermoplastic resin fibers and the temperature T in the lamination step of the recoating layer 30 is preferably -35°C or higher and 25°C or lower from the viewpoint of easily forming the adhesion layer 20, is more preferably -25°C or higher and 15°C or lower, and is further preferably -15°C or higher and 5°C or lower.

The difference ($T_{m2}-T$) between the highest melting point $T_{m2}$ of the thermoplastic resin fibers and the temperature T in the lamination step of the recoating layer 30 is preferably 40°C or higher and 110°C or lower, from the viewpoint of maintaining the form of the fiber and improving the ink receptivity for retaining the colorant, is more preferably 50°C or higher and 100°C or lower, and is further preferably 60°C or higher and 90°C or lower.

The difference ($T_{m2}-T_{m1}$) between the lowest melting point $T_{m1}$ and the highest melting point $T_{m2}$ of the thermoplastic resin fibers is preferably 50°C or higher and 120°C or lower, is more preferably 60°C or higher and 110°C or lower, and is further preferably 70°C or higher and 100°C or lower.

The fiber constituting the recoating layer 30 preferably contains two or more types of thermoplastic resin fibers having different glass transition temperatures $T_g$ from each other. It is preferable for the fiber constituting the recoating layer 30 to contain, for example, two types of thermoplastic resin fibers having different glass transition temperatures from each other, as the thermoplastic resin fibers, where one is a thermoplastic resin fiber having a low glass transition temperature (thermoplastic resin fiber having lowest glass transition temperature $T_{g1}$) and the other is a thermoplastic resin fiber having a high glass transition temperature (thermoplastic resin fiber having highest glass transition temperature $T_{g2}$) ($T_{g1}<T_{g2}$). In this way, due to the fiber constituting the recoating layer 30, which contains two or more types of thermoplastic resin fibers having different melting points (which contains, for example, thermoplastic resin fiber having the lowest glass transition temperature $T_{g1}$ and thermoplastic resin fiber having the highest glass transition temperature $T_{g2}$), when the recoating layer 30 is laminated at a temperature T ($T_{g1}<T<T_{g2}$), in the lamination step, a thermoplastic resin fiber having the lowest glass transition temperature $T_{g1}$ enhances the fluidity to form an adhesion layer 20 and thereby exhibits an adhesive strength, and on the other hand, a thermoplastic resin fiber having the highest glass transition temperature $T_{g2}$ maintains the form of the fiber, which thereby can make the ink receptivity for retaining the colorant satisfactory. In other words, it is preferable that the two or more types of thermoplastic resin fibers constituting the recoating layer 30, which have different glass transition temperatures $T_g$ from each other, satisfy the relationship of $T_{g1}<T<T_{g2}$.

The difference ($T_{g1}-T$) between the lowest glass transition temperature $T_{g1}$ of the thermoplastic resin fibers and the temperature T in the lamination step of the recoating layer 30 is preferably -160°C or higher and -90°C or lower from the viewpoint of easily forming the adhesion layer 20, is more preferably -150°C or higher and -100°C or lower, and is further preferably -140°C or higher and - 110°C or lower.

The difference ($T_{g2}-T$) between the highest glass transition temperature $T_{g2}$ of the thermoplastic resin fibers and the temperature T in the lamination step of the recoating layer 30 is preferably -140°C or higher and -70°C or lower, from the viewpoint of maintaining the form of the fiber and improving the ink receptivity for retaining the colorant, is more preferably -130°C or higher and -80°C or lower, and is further preferably -120°C or higher and -90°C or lower.

The difference ($T_{g2}-T_{g1}$) between the lowest glass transition temperature $T_{g1}$ and the highest glass transition temperature $T_{g2}$ of the thermoplastic resin fibers is preferably 0°C or higher and 50°C or lower, is more preferably 0°C or higher and 40°C or lower, and is further preferably 10°C or higher and 30°C or lower.

In addition, as described above, in a configuration in which the fiber constituting the recoating layer 30 contains two or more types of thermoplastic resin fibers having different glass transition temperatures $T_g$ from each other, even when the recoating layer 30 has been laminated at a temperature T under the condition of $T_{g1}<T_{g2}<T$ in the lamination step, the same effect as described above can be expected. In other words, the fluidity of the thermoplastic resin fiber having the lowest glass transition temperature $T_{g1}$ tends to easily become high, the thermoplastic resin fiber forms the adhesion layer 20, and thereby exhibits the adhesive strength, and on the other hand, the thermoplastic resin fiber having the highest glass transition temperature $T_{g2}$ does not enhance the fluidity so high, maintains the form of the fiber to some extent, and thereby can make the ink receptivity for retaining the colorant satisfactory.

In addition, in the case of the condition of $T_{g1}<T_{g2}<T$, it is preferable to satisfy $0°C \leq T_{m1}-T$, is more preferable to satisfy $0°C < T_{m1}-T$, and is further preferable to satisfy $10°C \leq T_{m1}-T$, from the viewpoint of easily obtaining the above effects.

Examples of the other fibers constituting the recoating layer 30 include: biodegradable fibers that use lactic acid which is obtained from starch such as corn, as the raw material; cellulose-based artificial fibers such as rayon, polynosic, cupra, acetate and triacetate; inorganic fibers such as glass fiber, carbon fiber, ceramic fiber and asbestos fiber; and regenerated fibers to be obtained from fiber products that have used these fibers. These fibers constituting the recoating layer 30 may be used solely, or in combination of two or more types thereof.

The recoating layer 30 is preferably a layer through which the picture of the picture ink layer 20 can be visually recognized, and is preferably a layer having transparency such as transparent paper or translucent paper. As for the transparency of the recoating layer 30, specifically, the opacity (the smaller the value is, the more excellent the transparency is) measured in accordance with JIS P8138:2000 is preferably 50% or lower, is more preferably 40% or lower, and is further preferably 30% or lower. For information, the lower limit of the opacity is about 10%. The recoating layer 30 can be obtained by any of well-known production methods such as a method of treating paper with concentrated sulfuric acid to make the paper transparent, a method of highly beating chemical pulp to make paper, a method of impregnating base paper with a transparency-enhancing agent such as wax and a synthetic resin, and a method of subjecting synthetic fibers and synthetic pulp mixed paper to heating and pressurizing treatment to make the paper transparent; and may be obtained by any production method.

A basis weight of the recoating layer 30 is not particularly limited, but is preferably 5 g/m$^2$ or more, is more preferably 10 g/m$^2$ or more, and is further preferably 15 g/m$^2$ or more, from the viewpoint that the recoating layer 30 obtains a mechanical strength. In addition, the basis weight of the recoating layer 30 is preferably 40 g/m$^2$ or less, is more preferably 35 g/m$^2$ or less, and is further preferably 30 g/m$^2$ or less, from the viewpoint of being capable of forming a coating film excellent in the ink receptivity for retaining the colorant.

The thickness of the recoating layer 30 is not particularly limited, but is preferably 40 $\mu$m or larger and 110 $\mu$m or smaller, is more preferably 50 $\mu$m or larger and 100 $\mu$m or smaller, and is further preferably 60 $\mu$m or larger and 90 $\mu$m or smaller, from the viewpoint of surely retaining a paint for recoating such as stain, preventing the paint from dripping down, and being capable of forming the coating film excellent in the ink receptivity for retaining the colorant.

On a surface side of the layer of the recoating layer 30, on which the adhesion layer 20 is provided in the thickness direction, a filled portion (not shown) is provided, in which a part of spaces among the fibers is filled with a melt of at least a part of thermoplastic resin fibers. The filled portion ensures the adhesiveness between the adhesion layer 20 and the recoating layer 30.

On the opposite surface side of the layer of the recoating layer 30 to the surface on which the adhesion layer 20 is provided in the thickness direction, a fiber portion (not shown) is provided in which at least parts of spaces among and surfaces of the fibers exist. The fiber portion of the recoating layer 30 ensures the ink receptivity for retaining the colorant (paint for recoating) by the spaces among and surfaces of the fibers, and can thereby have the colorant (paint for recoating) in at least a part of the spaces among and surfaces of the fibers.

«Resin coating film»

The recoating layer 30 preferably has a resin coating film (not shown) on at least a part of the surfaces of the fibers, while maintaining at least a part of the spaces. The resin coating film improves a function of the recoating layer 30 as a stain-paint receiving layer. The resin coating film exists on a part of the fibers of the recoating layer 30, improves the wettability of the fiber, thereby prevents the stain paint from dripping down, and makes it possible to form a coating film excellent in the ink receptivity for retaining the colorant.

Examples of the resin to be used for the resin coating film include a thermoplastic resin, a thermosetting resin, and an ionizing radiation curable resin. The resin to be used for the resin coating film can be used as a coating composition by being added with a curing agent such as a crosslinking agent and a polymerization initiator, a polymerization accelerator, a solvent, a viscosity modifier, an extender pigment, or the like, as needed.

Examples of the thermoplastic resin include natural and synthetic resins including: cellulose derivatives such as ethyl cellulose, cellulose nitrate, cellulose acetate, ethyl hydroxyethyl cellulose, and cellulose acetate propionate; styrene resins or styrene copolymers such as polystyrene and poly-$\alpha$-methyl styrene; acrylic resins such as polymethyl methacrylate, polyethyl methacrylate, polyethyl acrylate and polybutyl acrylate; vinyl polymers such as polyvinyl chloride, polyvinyl acetate, a vinyl chloride-vinyl acetate copolymer, and polyvinyl butyral; rosin ester resins such as rosin, a rosin-modified maleate resin, a rosin-modified phenol resin, and polymerized rosin; coumarone resins; vinyltoluene resins; and polyamide resins.

Examples of the thermosetting resin include a phenol resin, a urea resin, a diallyl phthalate resin, a melamine resin, a guanamine resin, an unsaturated polyester resin, a polyurethane resin, an epoxy resin, an amino alkyd resin, a melamine-urea co-condensation resin, a silicon resin and a polysiloxane resin.

As the ionizing radiation curable resin, a resin can be used that is conventionally used as an ionizing radiation curable resin, and for example, a (meth)acrylate-based resin can be used that has a (meth)acryloyl group which is an ionizing radiation curable functional group. For information, the term "(meth) acrylate" means "acrylate or methacrylate".

Examples of the (meth)acrylate-based resin include monomers, oligomers and prepolymers of urethane (meth)acrylate, acrylic (meth)acrylate, polyester (meth)acrylate, epoxy (meth)acrylate and the like. Among these (meth)acrylate-based resins, acrylate-based resins having an acryloyl group are preferable, such as urethane acrylate, acrylic acrylate, polyester acrylate and epoxy acrylate, from the viewpoint of the balance between the adhesiveness to a heat seal layer or the like and a strength of the coating film; and among the acrylate-based resins, urethane (meth)acrylate is preferable.

For information, the ionizing radiation means an electromagnetic wave or a charged particle beam having an energy quantum that can polymerize or crosslink a molecule, and ultraviolet rays (UV) or electron beams (EB) are usually used; but in addition, electromagnetic waves such as X-rays and $\gamma$-rays, and charged particle beams such as $\alpha$-rays and ion beams can also be used.

When the ionizing radiation curable resin is ultraviolet curable, it is preferable that a composition of the ionizing radiation curable resin contains an additive such as a photopolymerization initiator and a photopolymerization accelerator.

Examples of the photopolymerization initiator include one or more selected from acetophenone, benzophenone, $\alpha$-hydroxyalkylphenone, Michler's ketone, benzoin, benzyl methyl ketal, benzoyl benzoate, $\alpha$-acyloxime ester, thioxanthone and the like.

In addition, the photopolymerization accelerator is an agent that can alleviate polymerization inhibition by air during curing and enhance a curing rate; and examples thereof include one or more selected from p-dimethylaminobenzoic acid isoamyl ester, p-dimethylaminobenzoic acid ethyl ester, and the like.

<Adhesion layer>

The adhesion layer 20 is a layer that is formed by the melt deposition or the flow deposition of at least a part of the thermoplastic resin fibers provided between the base material 10 and the recoating layer 30. The adhesion layer 20 is arranged between the base material 10 and the recoating layer 30, and has a function of bonding the recoating layer 30 to the base material 10.

A step of forming the adhesion layer 20 firstly includes heating the recoating layer such as a non-woven fabric that contains thermoplastic resin fibers as the fiber of the constituent component, and thereby a part of the thermoplastic resin fibers becomes fluid. Then, a part of the thermoplastic resin fibers, which has enhanced the fluidity, is compressed in a laminating step, and thereby is extruded toward the base material 10 side from the remaining portion of the fiber of the constituent component; and the extruded fibers are deposited on the base material 10 and thereby form the adhesion layer 20.

It is preferable that a main component of the adhesion layer 20 is a melted component of the thermoplastic resin fiber that has a lower melting point among two or more types of thermoplastic resin fibers which have different melting points $T_m$ from each other. For example, when the fiber contains different two types of thermoplastic resin fibers having the lowest melting point $T_{m1}$ and the highest melting point $T_{m2}$ ($T_{m1}<T_{m2}$), as the thermoplastic resin fibers, and the recoating layer 30 is laminated at a temperature T ($T_{m1}<T<T_{m2}$) in the lamination step, the thermoplastic resin fiber having the lowest melting point $T_{m1}$ melts to form an adhesion layer 20 and thereby can exhibit an adhesive strength. Here, the main component refers to a component that exceeds 50% by mass of the components constituting the adhesion layer 20; and is preferably a component that exceeds 60% by mass, is more preferably a component that exceeds 70% by mass, and is further preferably a component that exceeds 80% by mass.

It is preferable that the main component of the adhesion layer 20 is a melted or fluidized component of the thermoplastic resin fiber that has a lower glass transition temperature among two or more types of thermoplastic resin fibers which have different glass transition temperatures $T_g$ from each other. For example, when the fiber contains different two types of thermoplastic resin fibers having the lowest glass transition temperature $T_{g1}$ and the highest glass transition temperature $T_{g2}$ ($T_{g1}<T_{g2}$), as the thermoplastic resin fibers, and when the recoating layer 30 is laminated at a temperature T ($T_{g1}<T<T_{g2}$), in the lamination step, a thermoplastic resin fiber having the lowest glass transition temperature $T_{g1}$ enhances the fluidity to form an adhesion layer 20, and can thereby exhibits an adhesive strength. Here, the main component refers to a component that exceeds 50% by mass of the components constituting the adhesion layer 20; and is preferably a component that exceeds 60% by mass, is more preferably a component that exceeds 70% by mass, and is further preferably a component that exceeds 80% by mass.

The thickness of the adhesion layer 20 is not particularly limited, but is preferably 20 $\mu$m or larger and 80 $\mu$m or smaller, is more preferably 30 $\mu$m or larger and 70 $\mu$m or smaller, and is further preferably 40 $\mu$m or larger and 60 $\mu$m or smaller, from the viewpoint of sufficiently exhibiting the adhesive strength between the base material 10 and the recoating layer 30.

[Production method for decorative sheet for recoating]

Regarding the production method for the decorative sheet 1 for recoating of the present invention, the production method will be described by taking the decorative sheet for recoating shown in Fig. 1, which is one of preferred embodiments of the decorative sheet for recoating of the present invention, as an example.

Firstly, a base material 10 is provided.

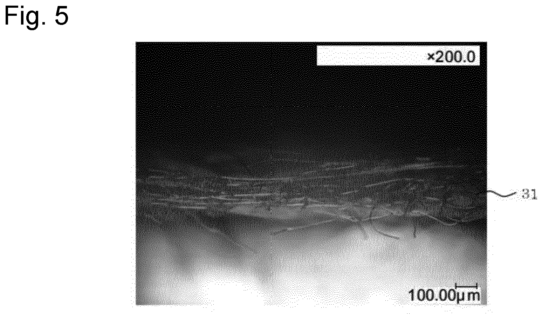

In addition, a non-woven fabric 31 (see Fig. 5) is prepared that contains two or more types of thermoplastic resin fibers having different melting points $T_m$ or glass transition temperature $T_g$ as fibers of the constituent component (for example, two types which are a thermoplastic resin fiber having the lowest melting point $T_{m1}$ and a thermoplastic resin fiber having the highest melting point $T_{m2}$).

Next, a laminate is obtained in which the non-woven fabric 31 is arranged on the base material 10, which contains two or more types of thermoplastic resin fibers having different melting points $T_m$ from each other.

Next, the laminate in which the base material 10 and the non-woven fabric are laminated is heated to a predetermined temperature T. The temperature T is preferably, for example, equal to or higher than the lowest melting point $T_{m1}$ of the thermoplastic resin fibers. In addition, it is also preferable to set the temperature T to the following (1) to (3). In addition, in the (3), it is more preferable for the temperature to be 0°C$<T_{m1}$-T, and is further preferable to be 10°C$\leq T_{m1}$-T.

$$(1) T_{m1} < T < T_{m2}$$

$$(2) T_{g1} < T < T_{g2}$$

$$(3)\ T_{g1} < T_{g2} < T\ \text{and}\ 0°C \leq T_{m1}\text{-}T$$

For information, when the laminate is heated, defects such as wrinkles can be reduced not by raising the temperature all at once to the desired temperature T, but by raising the temperature in stages. Due to the heating of the laminate, a part of the thermoplastic resin fibers contained in the non-woven fabric 31 enhances the fluidity.

Furthermore, due to the compression of the heated laminate by lamination or the like, a part of the thermoplastic resin fibers having enhanced the fluidity is deposited on a base material 10 side, and the deposit forms the adhesion layer 20. In addition, the remaining portion of the fibers constituting the non-woven fabric, which does not have enhanced the fluidity, forms the recoating layer 30 that maintains the form of the fibers. The difference (T1-T) between the temperature T1 at the time of compression such as lamination and the temperature T at the time of heating is preferably 0°C or larger and 100°C or smaller. As the conditions for compression such as lamination, the heating time period is preferably 10 seconds or longer and 2 minutes or shorter, and the pressure is preferably 8.0 kg/cm$^2$ or higher and 10.0 kg/cm$^2$ or lower.

Due to the above steps, it becomes possible to produce the decorative sheet 1 for recoating, which is the laminate of the base material 10, the adhesion layer 20 and the recoating layer 30 that are laminated in this order, has excellent adhesiveness between the base material 10 and the recoating layer 30 via the adhesion layer 20, has the form of the fiber in the recoating layer 30, and thereby has the satisfactory ink receptivity for retaining the colorant.

It is preferable that the production method for the decorative sheet 1 for recoating further includes a step of arranging the picture ink layer 11 on the base material 10 with the use of a composition for forming the picture ink layer, by a known printing method such as a gravure printing method.

In addition, it is preferable that the production method for the decorative sheet 1 for recoating further includes a step of arranging the color masking layer 12 on at least one of the base material 10 and the picture ink layer 11 with the use of a composition for forming the color masking layer, by a known printing method such as a gravure printing method.

Due to these steps being included, the production method can enhance the design of the decorative sheet 1 for recoating.

It is preferable that the production method for the decorative sheet 1 for recoating further includes a step of applying a composition for forming a resin coating film onto the front side of the recoating layer 30 of the decorative sheet 1 for recoating.

Due to the production method including this step, the decorative sheet 1 for recoating can be produced which has a resin coating film on at least a part of the surfaces of the fibers while maintaining at least a part of the spaces in the recoating layer 30.

[Method for coloring decorative sheet for recoating]

A method for coloring the decorative sheet 1 for recoating according to an embodiment of the present invention is a method of coating the recoating layer 30 of the decorative sheet 1 for recoating with a paint for recoating by a general coating method, and coloring the recoating layer 30.

The recoating layer 30 of the decorative sheet 1 for recoating has the fiber portion for maintaining the spaces among and surfaces of the fibers on the coated face side, and accordingly can ensure the ink receptivity for retaining the colorant such as a water-based stain paint and an oil-based stain paint by the spaces among and surfaces of the fibers. Therefore, when the recoating layer 30 is coated with the colorant such as stain and being subjected to coloring, the decorative sheet 1 for recoating according to the embodiment of the present invention can be easily colored into an arbitrary color.

Examples

Next, the present invention will be described in more detail with reference to Examples, but the present invention is not limited in any way by these Examples.

[Evaluation]

The decorative sheets for recoating obtained in Examples and Comparative Examples were evaluated in the following way. The results are shown in Table 1.

<Adhesiveness>

The decorative sheets for recoating produced in Examples and Comparative Examples were each cut into a size of 300 mm × 300 mm, and used as a test piece for an adhesiveness test. Only the recoating layer was peeled off from the end of the test piece, and the adhesiveness was evaluated.

A: Adhesiveness between the recoating layer and the base material is extremely high, and peeling does not occur (material breaks).
B: Adhesiveness between the recoating layer and the base material is high, and peeling hardly occurs.
C: Adhesiveness between the recoating layer and the base material is medium, and peeling is less likely to occur.
D: Adhesiveness between the recoating layer and the base material is low, and peeling occurs easily.

<Ink receptivity>

The recoating layer sides of the decorative sheets for recoating produced in Examples and Comparative Examples were coated with an oil-based stain paint and a water-based stain paint, respectively, and the resultant recoating layers were subjected to the evaluation of the ink receptivity.

A: The ink receptivities for oil-based stain paint and water-based stain paint are satisfactory.
B: The ink receptivities for oil-based stain paint and water-based stain paint are slightly poor.
C: The ink receptivities for oil-based stain paint and water-based stain paint are poor.

(Example 1)

A resin base material of polyvinyl chloride having a thickness of 100 $\mu$m was prepared as the base material. Then, a composition for forming a picture ink layer was applied onto the base material by gravure printing to have formed the picture ink layer having a thickness of 3.0 $\mu$m.
A non-woven fabric was prepared which had a basis weight of 25 g/m$^2$ and a thickness of 130 $\mu$m and contained a thermoplastic resin A (melting point: 165°C, and glass transition temperature: 50°C) and a thermoplastic resin B (melting point: 250°C, and glass transition temperature: 70°C). Then, a laminate was obtained in which the prepared non-woven fabric was arranged on the picture ink layer that was arranged on the base material.
Next, the obtained laminate was heated by thermal lamination (at 150°C for 12 minutes, by 50 kg/cm$^2$), and thereby a part of the thermoplastic resin fibers contained in the non-woven fabric enhanced the fluidity; and furthermore, a part of the thermoplastic resin fibers having enhanced the fluidity by the pressure bonding of the laminate was deposited on the base material side to have formed an adhesion layer having a thickness of 50 $\mu$m. In addition, the remaining portion of the fiber constituting the non-woven fabric, in which the fluidity did not enhance, formed the recoating layer which had a thickness of 80 $\mu$m and maintained the form of the fibers.
Next, a composition for forming a resin coating film, which contained a vinyl chloride-vinyl acetate copolymer resin, was applied onto the front side of the recoating layer to form a resin coating film on the recoating layer.
Through the above steps, a decorative sheet for recoating was obtained in which the base material 10, the adhesion layer 20 and the recoating layer 30 were laminated in this order.
The obtained decorative sheet for recoating was evaluated. The results are shown in Table 1.

(Example 2)

A decorative sheet for recoating of Example 2 was obtained in the same manner, except that the non-woven fabric in Example 1 was changed to a non-woven fabric which had a basis weight of 25 g/m$^2$ and a thickness of 130 $\mu$m and contained a thermoplastic resin C (melting point: 180°C, and glass transition temperature: 60°C) and a thermoplastic resin D (melting point: 250°C, and glass transition temperature: 70°C). The obtained decorative sheet for recoating was evaluated. The results are shown in Table 1.

(Example 3)

A decorative sheet for recoating of Example 3 was obtained in the same manner, except that the non-woven fabric in Example 1 was changed to a non-woven fabric which had a basis weight of 25 g/m$^2$ and a thickness of 130 $\mu$m and contained a thermoplastic resin C (melting point: 150°C, and glass transition temperature: 40°C) and a thermoplastic resin D (melting point: 250°C, and glass transition temperature: 70°C). The obtained decorative sheet for recoating was evaluated. The results are shown in Table 1.

(Comparative Example 1)

A decorative sheet for recoating of Comparative Example 1 was obtained in the same manner, except that the non-woven fabric in Example 1 was changed to a non-woven fabric which had a basis weight of 25 g/m$^2$ and a thickness of 130 $\mu$m and contained a thermoplastic resin having a melting point of 250°C and a glass transition temperature of 70°C, and that the base material and the non-woven fabric were bonded by an adhesion layer having a thickness of 20 $\mu$m with the use of a pressure-sensitive adhesive. The obtained decorative sheet for recoating was evaluated. The results are shown in Table 1.

(Comparative Example 2)

A decorative sheet for recoating of Comparative Example 2 was obtained in the same manner, except that the non-woven fabric in Example 1 was changed to a non-woven fabric which had a basis weight of 25 g/m$^2$ and a thickness of 130 $\mu$m and contained a thermoplastic resin having a melting point of 250°C and a glass transition temperature of 70°C, and that the base material and the non-woven fabric were bonded by an adhesion layer having a thickness of 1 $\mu$m with the use of a pressure-sensitive adhesive. The obtained decorative sheet for recoating was evaluated. The results are shown in Table 1.

(Comparative Example 3)

A decorative sheet for recoating of Comparative Example 3 was obtained in the same manner, except that the non-woven fabric in Example 1 was changed to a non-woven fabric which had a basis weight of 25 g/m$^2$ and a thickness of 130 $\mu$m and contained a thermoplastic resin (melting point: 165°C, and glass transition temperature: 50°C). The obtained decorative sheet for recoating was evaluated. The results are shown in Table 1.

(Comparative Example 4)

A decorative sheet for recoating of Comparative Example 4 was obtained in the same manner, except that the non-woven fabric in Example 1 was changed to a non-woven fabric which had a basis weight of 25 g/m$^2$ and a thickness of 130 $\mu$m and contained a thermoplastic resin (melting point: 250°C, and glass transition temperature: 70°C). The obtained decorative sheet for recoating was evaluated. The results are shown in Table 1.

Table 1

| | | Example 1 | Example2 | Example3 | Comparative Example 1 | Comparative Example 2 | Comparative Example 3 | Comparative Example 4 |
|---|---|---|---|---|---|---|---|---|
| Base material | Thickness ($\mu$m) | 100 | ← | ← | ← | ← | ← | ← |
| Adhesion layer | Thickness ($\mu$m) | - | - | - | 20 | 1 | - | - |
| Non-woven fabric | Basis weight (g/m$^2$) | 25 | ← | ← | ← | ← | ← | ← |
| | Thickness ($\mu$m) | 130 | ← | ← | ← | ← | ← | ← |
| | Melting point $T_m$ (°C) | 165/250 | 180/250 | 150/250 | 250 | 250 | 165 | 250 |
| | Glass transition temperature $T_g$ (°C) | 50/70 | 60/70 | 40/70 | 70 | 70 | 50 | 70 |
| Adhesiveness | | A | B | A | A | C | A | D |
| Ink receptivity | | A | A | B | C | A | C | A |

EP 3 950 302 A1

From Table 1, in Examples 1 to 3, the results of the adhesiveness and a coloring property were both satisfactory.

On the other hand, in Comparative Example 1, the adhesive seeped out from the surface of the recoating layer, and the coloring property was not satisfactory. In addition, in Comparative Example 2, the result of the adhesiveness was not satisfactory, because the amount of the adhesive was small. In addition, in Comparative Example 3, the evaluation of the adhesiveness became satisfactory, because the thermoplastic resin fibers contained in the non-woven fabric was heated to have formed an adhesive layer, but a result of the coloring property was not satisfactory, because the recoating layer maintaining the fiber form was not formed. In addition, in Comparative Example 4, the evaluation of the adhesiveness was not satisfactory, because the thermoplastic resin fibers contained in the non-woven fabric did not form an adhesive layer even when having been heated, but a result of the coloring property was satisfactory, because the recoating layer maintaining the fiber form was formed.

Industrial Applicability

The decorative sheet for recoating of the present invention has sufficient adhesiveness between the base material and the non-woven fabric, and has satisfactory coloring properties; and is suitably used as a layer that constitutes: an interior or exterior member of a building such as a wall, a ceiling and a floor; a fitting and a fixture member such as a window frame, a door, a handrail, a baseboard, a wall trim and a lacing; in addition, surface decorative sheets of cabinets of kitchen equipment, furniture, light electric equipment and office automation equipment; and an interior or exterior member of a vehicle.

Reference Signs List

1:    decorative sheet for recoating

10:    base material
11:    picture ink layer
12:    color masking layer
20:    adhesion layer
30:    recoating layer
31:    non-woven fabric

**Claims**

1. A decorative sheet for recoating comprising:

   a base material;
   a recoating layer that is provided on at least one surface side of the base material, contains thermoplastic resin fibers as fibers of a constituent component, and has spaces among the fibers; and
   an adhesion layer between the base material and the recoating layer, which has been formed by melt deposition or flow deposition of at least a part of the thermoplastic resin fibers.

2. The decorative sheet for recoating according to claim 1, wherein the recoating layer has a resin coating film on at least a part of surfaces of the fibers while maintaining at least a part of the spaces.

3. The decorative sheet for recoating according to claim 1 or 2, wherein the base material is a resin base material.

4. The decorative sheet for recoating according to any one of claims 1 to 3, wherein the fibers constituting the recoating layer contain two or more types of thermoplastic resin fibers having different melting points from each other.

5. The decorative sheet for recoating according to claim 4, wherein a main component of the adhesion layer is a melted component of the thermoplastic resin fiber that has a lower melting point among two or more types of thermoplastic resin fibers which have different melting points from each other.

6. The decorative sheet for recoating according to any one of claims 1 to 5, wherein the fibers constituting the recoating layer contain two or more types of thermoplastic resin fibers having different glass transition temperatures from each other.

7. The decorative sheet for recoating according to claim 6, wherein the main component of the adhesion layer is a melted or fluidized component of the thermoplastic resin fiber that has a lower glass transition temperature among two or more types of thermoplastic resin fibers which have different glass transition temperatures from each other.

8. The decorative sheet for recoating according to any one of claims 1 to 7, wherein the recoating layer has a colorant on at least parts of the spaces among and the surfaces of the fibers.

9. A production method for a decorative sheet for recoating comprising:

a step of providing a base material;
a step of providing a non-woven fabric that contains two or more types of thermoplastic resin fibers having different melting points from each other as fibers of a constituent component;
a step of obtaining a laminate in which the non-woven fabric is arranged on the base material;
a step of heating the laminate to a temperature of a lowest melting point of the thermoplastic resin fibers or higher; and
a step of compressing the heated laminate so that a part of the thermoplastic resin fibers of which the fluidity has been enhanced is deposited on the base material side to form an adhesion layer.

Fig. 1

Fig. 2

Fig. 3

Fig. 4

Fig. 5

## INTERNATIONAL SEARCH REPORT

| International application No. |
|---|
| PCT/JP2020/014030 |

A. CLASSIFICATION OF SUBJECT MATTER
B32B 5/24(2006.01)i; B32B 27/00(2006.01)i
FI: B32B27/00 E; B32B5/24

According to International Patent Classification (IPC) or to both national classification and IPC

B. FIELDS SEARCHED

Minimum documentation searched (classification system followed by classification symbols)
B32B5/24; B32B27/00

Documentation searched other than minimum documentation to the extent that such documents are included in the fields searched
Published examined utility model applications of Japan       1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-151 711 A (DAINIPPON PRINTING CO., LTD.) 09.06.1998 (1998-06-09) claims, paragraphs [0026]-[0027], examples | 1-9 |
| X | JP 9-262934 A (DAINIPPON PRINTING CO., LTD.) 07.10.1997 (1997-10-07) claims, paragraph [0011], examples | 1-9 |
| X | JP 11-179852 A (DAINIPPON PRINTING CO., LTD.) 06.07.1999 (1999-07-06) claims, paragraphs [0016], [0034], examples | 1-9 |

☐ Further documents are listed in the continuation of Box C.      ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June 2020 (08.06.2020) | 16 June 2020 (16.06.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

## INTERNATIONAL SEARCH REPORT
Information on patent family members

International application No.

PCT/JP2020/014030

| Patent Documents referred in the Report | Publication Date | Patent Family | Publication Date |
|---|---|---|---|
| JP 10-151711 A | 09 Jun. 1998 | (Family: none) | |
| JP 9-262934 A | 07 Oct. 1997 | US 5827788 A column 4, lines 10-18, examples, claims EP 764550 A2 AU 6570796 A TW 387844 B CA 2186080 A1 | |
| JP 11-179852 A | 06 Jul. 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60149457 A

- JP 9262934 A